(19) Europäisches Patentamt
European Patent Office
Office européen des brevets

(11) **EP 4 265 437 A1**

(12) **EUROPEAN PATENT APPLICATION**

(43) Date of publication:
**25.10.2023 Bulletin 2023/43**

(21) Application number: **23168991.0**

(22) Date of filing: **20.04.2023**

(51) International Patent Classification (IPC):
*B60C 1/00* $^{(2006.01)}$     *C08L 7/00* $^{(2006.01)}$
*C08L 7/02* $^{(2006.01)}$     *C08L 9/08* $^{(2006.01)}$

(52) Cooperative Patent Classification (CPC):
(C-Sets available)
**C08L 7/00; B60C 1/00; C08L 7/02; C08L 9/08;**
B60C 1/0016                                              (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.04.2022 JP 2022071054**

(71) Applicant: **Sumitomo Rubber Industries, Ltd.
Kobe-shi, Hyogo 651-0072 (JP)**

(72) Inventors:
• **MIYAZAKI, Sumiko
Kobe-shi,, 651-0072 (JP)**
• **SATO, Daisuke
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(54) **RUBBER COMPOSITION AND TIRE**

(57)    The present invention provides a rubber composition and a tire which are excellent in handling stability during high-speed driving. The present invention relates to a rubber composition which contains a rubber component and silica, wherein the coefficient of variation (CV value) of the maximum diameters of the particles of the silica observed with an electron microscope satisfies the following relationship (1): CV value $\leq$ 7.

(52) Cooperative Patent Classification (CPC): (Cont.)

C-Sets
**C08L 7/00, C08L 1/00, C08K 3/36, C08K 5/20,
C08K 5/18, C08K 3/22, C08K 5/09, C08K 3/04,
C08K 5/548, C08K 3/06, C08K 5/47, C08K 5/31;
C08L 7/02, C08L 1/00, C08K 3/36, C08K 5/20,
C08K 5/18, C08K 3/22, C08K 5/09, C08K 3/04,
C08K 5/548, C08K 3/06, C08K 5/47, C08K 5/31;
C08L 9/08, C08L 1/00, C08K 3/36, C08K 5/20,
C08K 5/18, C08K 3/22, C08K 5/09, C08K 3/04,
C08K 5/548, C08K 3/06, C08K 5/47, C08K 5/31**

**Description**

TECHNICAL FIELD

The present invention relates to a rubber composition and a tire including the rubber composition.

BACKGROUND ART

Tires have been proposed which include a silica-containing rubber composition to impart various desirable properties. As high-speed driving has been increasing in recent years, it has become desirable to improve handling stability during high-speed driving.

SUMMARY OF INVENTION

TECHNICAL PROBLEM

The present invention aims to solve the above problem and provide a rubber composition and a tire which are excellent in handling stability during high-speed driving.

SOLUTION TO PROBLEM

The present invention relates to a rubber composition containing at least one rubber component and at least one silica, the rubber composition satisfying the following relationship (1):

$$CV\ value\ \leq\ 75\%$$

wherein CV value represents a coefficient of variation of maximum diameters of particles of the silica observed with an electron microscope.

ADVANTAGEOUS EFFECTS OF INVENTION

The rubber composition of the present invention contains a rubber component and silica and satisfies relationship (1) with respect to the coefficient of variation (CV value) of the maximum diameters of the particles of the silica observed with an electron microscope. Thus, the present invention provides a rubber composition and a tire which are excellent in handling stability during high-speed driving.

BRIEF DESCRIPTION OF DRAWINGS

FIG. 1 is a cross-sectional view illustrating a part of a pneumatic tire.
FIG. 2 is an enlarged view of the area around the tread 4 in FIG. 1.

DESCRIPTION OF EMBODIMENTS

<Rubber composition>

The rubber composition of the present invention contains a rubber component and silica and satisfies relationship (1) with respect to the coefficient of variation (CV value) of the maximum diameters of the particles of the silica observed with an electron microscope.
The reason for the above-mentioned advantageous effect is not exactly clear, but the advantageous effect is believed to be due to the following mechanism.
It is considered that the rubber component may be reinforced by the silica in the rubber composition to provide rigidity, and at the same time, a network of the polymer reinforced by the silica may be formed to generate a reaction force.
During high-speed driving, it is considered necessary to efficiently generate a reaction force while ensuring rigidity. According to the present invention, the CV value of the maximum diameters of the silica particles in the rubber composition is adjusted to 75% or less. This is considered to facilitate uniformity in the distance and amount of the polymer reinforced by the silica in the rubber composition, and facilitate force transmission in the rubber, so that the handling stability at high speeds can be improved compared to the prior art.

For this reason, it is believed that the handling stability during high-speed driving can be improved.

Thus, the problem (purpose) of improving handling stability during high-speed driving is solved by formulating a rubber composition which satisfies the relationship (1): CV value ≤ 75% wherein CV value represents the coefficient of variation of the maximum diameters of the particles of the silica observed with an electron microscope. In other words, the parameter of the relationship (1): CV value ≤ 75% does not define the problem (purpose) and the problem herein is to improve handling stability during high-speed driving. In order to solve this problem, the rubber composition has been formulated to satisfy the parameter.

The rubber composition satisfies the following relationship (1):

$$CV\ value\ \leq\ 75\%$$

wherein CV value represents the coefficient of variation of the maximum diameters of the particles of silica observed with an electron microscope.

The CV value is preferably 71.7% or less, more preferably 71% or less, still more preferably 70.5% or less, further preferably 70.0% or less, further preferably 68.9% or less, further preferably 68.3% or less, further preferably 60.3% or less, further preferably 60% or less, further preferably 55% or less, further preferably 52% or less, further preferably 51.5% or less. A smaller CV value is considered to facilitate uniformity in the distance and amount of the polymer reinforced by the silica in the rubber composition, and facilitate force transmission in the rubber, so that the handling stability at high speeds can be improved. Thus, the CV value is desirably as small as possible and the lower limit is not limited, but it is, for example, preferably 5.0% or more, more preferably 10.0% or more, still more preferably 20.0% or more.

The rubber composition desirably satisfies the following relationship:

$$D\ \leq\ 0.100\ \mu m$$

wherein D represents the average of the maximum diameters of the particles of silica observed with an electron microscope.

The D is preferably 0.092 um or less, more preferably 0.070 um or less, still more preferably 0.064 um or less, further preferably 0.063 um or less, further preferably 0.061 um or less, further preferably 0.059 um or less, further preferably 0.053 um or less. The lower limit is preferably 0.030 um or more, more preferably 0.040 um or more, still more preferably 0.045 um or more, further preferably 0.050 um or more, further preferably 0.051 um or more. When the D is within the range indicated above, the advantageous effect can be suitably achieved.

Here, the coefficient of variation (CV value) is calculated from the average and standard deviation of the maximum diameters of the particles of silica in the rubber composition using the following equation:

$$Coefficient\ of\ variation\ (\%)\ =\ (Standard\ deviation\ of$$
$$maximum\ diameters\ (\mu m)\ of\ particles\ of\ silica)/(Average\ of$$
$$maximum\ diameters\ (\mu m)\ of\ particles\ of\ silica)\ \times\ 100.$$

The maximum diameters of the particles of silica in the rubber composition are measured by electron microscopic observation.

Specifically, the rubber composition may be observed with an electron microscope such as SEM or TEM, and then an obtained image may be binarized using an image analysis software such as ImageJ to calculate the maximum diameters of the particles of silica. More specifically, the measurement can be performed as described later in

EXAMPLES.

In the present invention, the coefficient of variation (CV value) refers to the coefficient of variation of the maximum diameters of the particles of silica in the rubber composition that has been vulcanized.

The coefficient of variation (CV value) can be reduced by various methods which can improve silica dispersion in rubber (or reduce variations in average particle size).

For example, the CV value may be reduced by using a mixture (masterbatch) of water, silica, and a dispersing agent such as a fatty acid amide compound.

The average D of the maximum diameters of the particles of silica can be reduced by various methods which can improve silica dispersion in rubber (or reduce variations in average particle size).

For example, the average D of the maximum diameters may be reduced by using a mixture (masterbatch) containing silica and a dispersing agent such as a fatty acid amide compound.

(Rubber component)

The rubber composition contains one or more rubber components.

The rubber components in the rubber composition contribute to crosslinking and generally correspond to polymer components which have a weight average molecular weight (Mw) of 10,000 or more and which are not extractable with acetone. The rubber components are solid at room temperature (25°C).

The weight average molecular weight of the rubber components is preferably 50,000 or more, more preferably 150,000 or more, still more preferably 200,000 or more, while it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined with a gel permeation chromatograph (GPC) (GPC-8000 series available from Tosoh Corporation, detector: differential refractometer, column: TSKGEL SUPERMULTIPORE HZ-M available from Tosoh Corporation) relative to polystyrene standards.

Examples of rubber components usable in the rubber composition include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more. To better achieve the advantageous effect, isoprene-based rubbers, BR, and SBR are preferred among these, with isoprene-based rubbers being more preferred. These rubber components may also be subjected to the below-described modification or hydrogenation process. Rubbers extended with oils, resins, liquid rubber components, etc. are also usable.

The reason why the above-mentioned advantageous effect can be significantly achieved by using isoprene-based rubbers is not exactly clear, but it is considered that isoprene-based rubbers having high molecular weights may facilitate network formation and thus may facilitate the generation and transmission of a reaction force. For this reason, it is believed that the handling stability during high-speed driving can be significantly improved.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the above functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the above functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. Here, these functional groups may be substituted. Amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups) are preferred among these.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of isoprene-based rubbers based on 100% by mass of the rubber components in the rubber composition is preferably 5% by mass or more, more preferably 50% by mass or more, still more preferably 75% by mass or more, particularly preferably 85% by mass or more, and may be 100% by mass. When the amount is within the range indicated above, the advantageous effect tends to be better achieved. Here, the same range is also desirable for a tread rubber composition or a belt layer rubber composition.

Any BR may be used. Examples include high-cis BR having a high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or more. The cis content is more preferably 95% by mass or more. Here, the cis content can be measured by infrared absorption spectrometry.

Moreover, the BR may be either unmodified or modified BR. Examples of the modified BR include those into which functional groups as listed for the modified diene rubbers have been introduced. The BR may also be hydrogenated polybutadiene polymers (hydrogenated BR).

The BR may be commercially available from, for example, Ube Industries, Ltd., JSR Corporation, Asahi Kasei Corporation, Zeon Corporation, etc.

When the rubber composition contains BR, the amount of BR based on 100% by mass of the rubber components is preferably 5% by mass or more, more preferably 10% by mass or more, still more preferably 15% by mass or more. The upper limit is preferably 50% by mass or less, more preferably 30% by mass or less, still more preferably 20% by mass or less. When the amount is within the range indicated above, the advantageous effect tends to be better achieved. Here, the same range is also desirable for a tread rubber composition or a belt layer rubber composition.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 20% by mass or higher, still more preferably 25% by mass or higher. The styrene content is preferably 45% by mass or lower, more preferably 40% by mass or lower, still more preferably 37.5% by mass or lower, further preferably 35% by mass or lower. When the styrene content is within the range indicated above, the handling stability during high-speed driving tends to be improved.

Herein, the styrene content can be determined by $^1$H-NMR analysis.

The vinyl bond content of the SBR is preferably 3% by mass or higher, more preferably 5% by mass or higher, still more preferably 7% by mass or higher. The vinyl bond content is preferably 25% by mass or lower, more preferably 18% by mass or lower, still more preferably 15% by mass or lower, further preferably 13% by mass or lower. When the vinyl bond content is within the range indicated above, the handling stability during high-speed driving tends to be improved.

Herein, the vinyl bond content (1,2-butadiene unit content) can be determined by infrared absorption spectrometry.

The SBR may be either unmodified or modified SBR. Examples of the modified SBR include those into which functional groups as listed for the modified diene rubbers have been introduced. The SBR may also be hydrogenated styrene-butadiene copolymers (hydrogenated SBR).

For example, SBR products manufactured or sold by Sumitomo Chemical Co., Ltd., JSR Corporation, Asahi Kasei Corporation, Zeon Corporation, etc., may be used as the SBR.

When the rubber composition contains SBR, the amount of SBR based on 100% by mass of the rubber components is preferably 5% by mass or more, more preferably 10% by mass or more, still more preferably 15% by mass or more. The upper limit is preferably 50% by mass or less, more preferably 30% by mass or less, still more preferably 20% by mass or less. When the amount is within the range indicated above, the advantageous effect tends to be better achieved. Here, the same range is also desirable for a tread rubber composition or a belt layer rubber composition.

(Filler)

The rubber composition contains silica.

Examples of usable silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to these types of silica, silica made from biomass materials such as rice husks is also usable.

The nitrogen adsorption specific surface area ($N_2SA$) of the silica is preferably 50 $m^2/g$ or more, more preferably 100 $m^2/g$ or more, still more preferably 115 $m^2/g$ or more, further preferably 150 $m^2/g$ or more, further preferably 160 $m^2/g$ or more, particularly preferably 180 $m^2/g$ or more, most preferably 190 $m^2/g$ or more. Moreover, the upper limit of the $N_2SA$ of the silica is not limited, but it is preferably 350 $m^2/g$ or less, more preferably 300 $m^2/g$ or less, still more preferably 275 $m^2/g$ or less, further preferably 250 $m^2/g$ or less, further preferably 220 $m^2/g$ or less. When the $N_2SA$ is within the range indicated above, the advantageous effect tends to be better achieved.

Here, the $N_2SA$ of the silica is measured by a BET method in accordance with ASTM D3037-93.

The amount of silica per 100 parts by mass of the rubber components in the rubber composition is preferably 5 parts by mass or more, more preferably 30 parts by mass or more, still more preferably 40 parts by mass or more, particularly preferably 50 parts by mass or more. The upper limit of the amount is preferably 200 parts by mass or less, more preferably 150 parts by mass or less, still more preferably 100 parts by mass or less, particularly preferably 80 parts by mass or less. When the amount is within the range indicated above, the advantageous effect tends to be better achieved. Here, the same range is also desirable for a tread rubber composition or a belt layer rubber composition.

The reason why the above-mentioned advantageous effect can be significantly achieved by incorporating a large amount of silica, particularly at least 30 parts by mass of silica, is not exactly clear, but it is considered that the rigidity may be improved due to the reinforcement effect of the silica, and at the same time, the reaction force generated by the network formed of the silica and polymer may be further increased. For this reason, it is believed that the handling stability during high-speed driving can be significantly improved.

The rubber composition which contains silica preferably further contains a silane coupling agent.

Any silane coupling agent may be used, including those known in the rubber field. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Evonik Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The rubber composition may contain fillers other than silica.

The total amount of fillers (the total amount of fillers such as silica, carbon black, etc.) per 100 parts by mass of the rubber components in the rubber composition is preferably 10 parts by mass or more, more preferably 35 parts by mass or more, still more preferably 45 parts by mass or more, particularly preferably 55 parts by mass or more. The upper limit of the amount is preferably 200 parts by mass or less, more preferably 150 parts by mass or less, still more preferably 100 parts by mass or less, particularly preferably 80 parts by mass or less. When the total amount is within the range indicated above, the advantageous effect tends to be better achieved. Here, the same range is also desirable for a tread rubber composition or a belt layer rubber composition.

Any filler other than silica may be used, including materials known in the rubber field. Examples include inorganic fillers such as carbon black, calcium carbonate, talc, alumina, clay, aluminum hydroxide, aluminum oxide, and mica; and poorly dispersible fillers. Fillers derived from carbon (carbon-containing fillers) such as carbon black are preferred among these.

Any carbon black may be used in the rubber composition, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more. In addition to the conventional carbon black made from mineral oils, etc., carbon black made from biomass materials such as lignin is also usable.

The nitrogen adsorption specific surface area ($N_2SA$) of the carbon black is preferably 30 $m^2/g$ or more, more preferably 50 $m^2/g$ or more, still more preferably 70 $m^2/g$ or more. The $N_2SA$ is also preferably 200 $m^2/g$ or less, more preferably 150 $m^2/g$ or less, still more preferably 130 $m^2/g$ or less, further preferably 120 $m^2/g$ or less, further preferably 114 $m^2/g$ or less. When the $N_2SA$ is within the range indicated above, the advantageous effect tends to be better achieved.

The amount of carbon black per 100 parts by mass of the rubber components in the rubber composition is preferably 1 part by mass or more, more preferably 3 parts by mass or more. The upper limit of the amount is preferably 50 parts by mass or less, more preferably 20 parts by mass or less, still more preferably 10 parts by mass or less, particularly preferably 5 parts by mass or less. When the amount is within the range indicated above, the advantageous effect tends to be better achieved. Here, the same range is also desirable for a tread rubber composition or a belt layer rubber composition.

Examples of poorly dispersible fillers include microfibrillated plant fibers, short fibrous cellulose, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone or in combinations of two or more.

Herein, the term "cellulose microfibrils" typically refers to cellulose fibers having an average fiber diameter of not more than 10 $\mu$m, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of poorly dispersible fillers per 100 parts by mass of the rubber components in the rubber composition is preferably 0.5 parts by mass or more, more preferably 1 part by mass or more, still more preferably 3 parts by mass or more, further preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

(Dispersing agent)

To better achieve the advantageous effect, the rubber composition desirably contains a dispersing agent.

For example, compounds which can serve to disperse silica are usable as the dispersing agent. Fatty acid amide compounds are desirable among these.

The reason why the above-mentioned advantageous effect can be significantly achieved by using a dispersing agent, particularly a fatty acid amide compound, is not exactly clear, but it is considered that the inclusion of the fatty acid amide compound may facilitate a reduction in the average particle size of the silica. For this reason, it is believed that the handling stability during high-speed driving can be significantly improved.

The amount of dispersing agents per 100 parts by mass of the rubber components in the rubber composition is preferably 1 part by mass or more, more preferably 5 parts by mass or more, still more preferably 8 parts by mass or more, particularly preferably 10 parts by mass or more. The upper limit of the amount is preferably 60 parts by mass or less, more preferably 50 parts by mass or less, still more preferably 40 parts by mass or less. When the amount is within the range indicated above, the advantageous effect tends to be better achieved. Here, the same range is also desirable for a tread rubber composition or a belt layer rubber composition. Moreover, the same range is also desirable for the amount of fatty acid amide compounds.

In the rubber composition, the ratio of the amount of silica to the amount of dispersing agents (silica content (parts by mass)/dispersing agent content (parts by mass)) is preferably 1/99 to 99/1, more preferably 10/90 to 90/10, still more preferably 20/80 to 80/20, further preferably 30/70 to 70/30, particularly preferably 40/60 to 60/40. When the ratio is within the range indicated above, the advantageous effect tends to be better achieved. Here, the same range is also desirable for a tread rubber composition or a belt layer rubber composition. Moreover, the same range is also desirable for the amount of fatty acid amide compounds.

Examples of the aliphatic hydrocarbon groups of the fatty acid amide compounds include saturated or unsaturated aliphatic hydrocarbon groups having a linear, branched, or cyclic structure, such as alkyl, alkenyl, alkenediyl, and cycloalkyl groups. The number of carbon atoms of the aliphatic hydrocarbon groups is, for example, desirably 10 to 25.

Examples of the fatty acid amide compounds include monoamides, substituted amides, bisamides, methylol amides and ester amides.

Examples of the monoamides include compounds represented by the following formula:

$$R^1\text{-}CONH_2$$

wherein $R^1$ represents a C10-C25 aliphatic hydrocarbon group.

Specific examples of the monoamides include lauramide, palmitamide, stearamide, behenamide, hydroxystearamide, oleamide, and erucamide.

Examples of the substituted amides include compounds represented by the following formula:

$$R^2\text{-}CONH\text{-}R^3$$

wherein $R^2$ and $R^3$ may be the same or different and each represent a C10-C25 aliphatic hydrocarbon group.

Specific examples of the substituted amides include N-oleyl palmitamide, N-stearyl stearamide, N-stearyl oleamide, N-oleyl stearamide, and N-stearyl erucamide.

Examples of the bisamides include compounds represented by the following two formulas:

$$R^4\text{-}CONH\text{-}R^5\text{-}HNCO\text{-}R^6;$$

and

$$R^7\text{-}NHCO\text{-}R^8\text{-}CONH\text{-}R^9$$

wherein $R^4$, $R^6$, $R^7$, and $R^9$ may be the same or different and each represent a C10-C25 aliphatic hydrocarbon group, and $R^5$ and $R^8$ each represent an alkylene group or an arylene group.

Specific examples of the bisamides include methylene bis-stearamide, ethylene bis-capramide, ethylene bis-lauramide, ethylene bis-stearamide, ethylene bis-hydroxystearamide, ethylene bis-behenamide, hexamethylene bis-stearamide, hexamethylene bis-behenamide, hexamethylene hydroxystearamide, ethylene bis-oleamide, ethylene bis-erucamide, hexamethylene bis-oleamide, N,N-distearyl adipamide, N,N'-distearyl sebacamide, N,N'-dioleyl adipamide, and N,N'-dioleyl sebacamide.

Specific examples of the fatty acid amide compounds include diethanololeamide, palmitoylethanolamide, and oleylethanolamide. These may be used alone or in combinations of two or more.

(Plasticizer)

The rubber composition may contain a plasticizer.

The term "plasticizer" refers to a material that can impart plasticity to rubber components, and examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber components in the rubber composition is preferably 100 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved. It should be noted that when the above-mentioned extended rubbers are used, the amount of the extender components used in the extended rubbers are included in the amount of plasticizers.

Any liquid plasticizer (plasticizer which is liquid at room temperature (25°C)) may be used in the rubber composition, and examples include oils and liquid polymers (liquid resins, liquid diene polymers, etc.). These may be used alone or in combinations of two or more.

The amount of liquid plasticizers per 100 parts by mass of the rubber components in the rubber composition is preferably 100 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved. Here, the same range is also suitable for the amount of oils.

Examples of the oils include process oils, plant oils, and mixtures thereof. Examples of the process oils include paraffinic process oils such as mild extract solvated (MES), distillate aromatic extract (DAE), treated distillate aromatic extract (TDAE), treated residual aromatic extract (TRAE), and residual aromatic extract (RAE), aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. From the standpoint of life cycle assessment, oils obtained by purifying lubricating oils used in rubber mixing machines, engines, or other applications, or waste cooking oils used in cooking establishments may also be used as the oils.

Examples of the liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins are also usable.

Examples of the liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

When the rubber composition contains the above-mentioned resins, the amount of the above-mentioned resins per 100 parts by mass of the rubber components is preferably 100 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the above-mentioned resins is preferably 60°C or higher, more preferably 70°C or higher, still more preferably 80°C or higher. The upper limit is preferably 160°C or lower, more preferably 130°C or lower, still more preferably 115°C or lower. When the softening point is within the range indicated above, the handling stability during high-speed driving tends to be improved.

Here, the softening point of the resins is determined as set forth in JIS K 6220-1:2001 using a ring and ball softening point measuring apparatus and defined as the temperature at which the ball drops down. The softening point of the resins is usually higher by 50°C $\pm$ 5°C than the glass transition temperature of the resins.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpene. Examples of such terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, $\alpha$-pinene and $\beta$-pinene, are classified into $\beta$-pinene resins mainly containing $\beta$-pinene and $\alpha$-pinene resins mainly containing $\alpha$-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are herein incorporated by reference) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

(Other materials)

The rubber composition preferably contains an antioxidant from the standpoint of properties such as crack resistance and ozone resistance.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Among these, p-phenylenediamine or quinoline antioxidants are preferred, and N-(1,3-dimethylbutyl)-N'-phenyl-p-phenylenediamine or polymerized 2,2,4-trimethyl-1,2-dihydroquinoline is more preferred. Usable commercial products are available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber components in the rubber composition is preferably 0.2 parts by mass or more, more preferably 0.5 parts by mass or more, still more preferably 2.0 parts by mass or more. The amount is preferably 7.0 parts by mass or less, more preferably 4.0 parts by mass or less.

The rubber composition preferably contains stearic acid. The amount of stearic acid per 100 parts by mass of the rubber components in the rubber composition is preferably 0.5 to 10 parts by mass, more preferably 0.5 to 4 parts by mass.

Here, conventionally known stearic acid may be used, including, for example, those available from NOF Corporation, Kao Corporation, FUJIFILM Wako Pure Chemical Corporation, Chiba Fatty Acid Co., Ltd., etc.

The rubber composition preferably contains zinc oxide. The amount of zinc oxide per 100 parts by mass of the rubber components in the rubber composition is preferably 0.5 to 10 parts by mass, more preferably 1 to 3 parts by mass.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The rubber composition may contain a wax. The amount of waxes per 100 parts by mass of the rubber components in the rubber composition is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of the petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Usable commercial products are available from, for example, Ouchi Shinko Chemical Industrial Co., Ltd., Nippon Seiro Co., Ltd., Seiko Chemical Co., Ltd., etc.

The rubber composition preferably contains sulfur to moderately form crosslinks between the polymer chains, thereby providing good properties.

The amount of sulfur per 100 parts by mass of the rubber components in the rubber composition is preferably 0.1 parts by mass or more, more preferably 1.0 parts by mass or more, still more preferably 1.7 parts by mass or more. The amount is preferably 5.0 parts by mass or less, more preferably 3.0 parts by mass or less, still more preferably 2.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The rubber composition preferably contains a vulcanization accelerator.

The amount of vulcanization accelerators in the rubber composition is not limited and may be freely determined according to the desired curing rate and crosslink density. The amount of vulcanization accelerators per 100 parts by mass of the rubber components is preferably 0.5 parts by mass or more, more preferably 2.0 parts by mass or more, still more preferably 2.7 parts by mass or more. The upper limit is preferably 8.0 parts by mass or less, more preferably 6.0 parts by mass or less, still more preferably 5.0 parts by mass or less.

Any type of vulcanization accelerator may be used, including those generally used. Examples of such vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide, guanidine, and benzothiazole vulcanization accelerators are preferred among these.

In addition to the above-mentioned components, the rubber composition may appropriately contain compounding agents commonly used in the tire industry, such as releasing agents and other materials.

The rubber composition may be prepared by known methods. For example, the rubber composition may be prepared by kneading the components using a rubber kneading machine such as an open roll mill or a Banbury mixer and then vulcanizing the kneaded mixture.

In particular, to better achieve the advantageous effect, the rubber composition may desirably be prepared by a method including step (1) of preparing a silica dispersion containing the above-mentioned silica and the above-mentioned dispersing agent (preferably the above-mentioned fatty acid amide compound) and step (2) of preparing a silica/rubber mixture (compounded latex) containing the silica dispersion and a rubber latex.

(Step (1))

The silica dispersion prepared in step (1) is a dispersion (slurry) in which the silica and the dispersing agent are dispersed in a solvent. Any solvent may be used, including water and organic solvents such as alcohols. Water is preferred among these.

The amount of silica (solids content) in the silica dispersion is not limited and it is preferably 0.2 to 20.0% by mass, more preferably 0.5 to 10.0% by mass, still more preferably 0.5 to 7.0% by mass.

In step (1), the silica dispersion may be prepared by mixing the silica, dispersing agent, and solvent, e.g., using a known stirring device such as a high-speed homogenizer, an ultrasonic homogenizer, a colloid mill, or a blender mill. A silica dispersion containing the silica and dispersing agent can be obtained by sufficiently stirring them until they are sufficiently dispersed. The temperature and time during the preparation of the silica dispersion may be appropriately selected within a general range as long as the silica and dispersing agent can be sufficiently dispersed, for example, preferably at 10 to 40°C for 3 to 120 minutes, more preferably at 15 to 30°C for 5 to 90 minutes.

In step (1), the silica/dispersing agent mixing ratio (silica content (parts by mass)/dispersing agent content (parts by mass)) is preferably 1/99 to 99/1, more preferably 10/90 to 90/10, still more preferably 20/80 to 80/20, further preferably 30/70 to 70/30, particularly preferably 40/60 to 60/40. When the ratio is within the range indicated above, the advantageous effect tends to be better achieved. Here, the same range is also desirable for the silica/fatty acid amide compound ratio.

Here, in the preparation of the silica dispersion containing the silica and dispersing agent in step (1), it is desirable to prepare a silica dispersion further containing microfibrillated plant fibers as described above. In this case, the microfibrillated plant fibers usually act as an antisettling agent for the silica. Thus, the addition of microfibrillated plant fibers allows the silica to mix with a rubber latex while being prevented from settling or aggregating, so that they can be uniformly coagulated during the coagulation.

When the silica dispersion further containing the microfibrillated plant fibers is prepared in step (1), the amount of microfibrillated plant fibers (solids content) based on the silica dispersion is preferably 0.1 to 10.0% by mass, more preferably 0.5 to 5.0% by mass, still more preferably 1.0 to 3.0% by mass. Moreover, the amount of microfibrillated plant fibers (solids content) per 100 parts by mass of the silica in the silica dispersion is preferably 0.01 to 1.00% by mass, more preferably 0.05 to 0.50% by mass, still more preferably 0.10 to 0.30% by mass.

(Step (2))

Next, step (2) of preparing a silica/rubber mixture (compounded latex) containing the silica dispersion obtained in step (1) and a rubber latex is performed.

Suitable examples of the rubber latex include diene rubber latexes such as natural rubber latexes, refined natural rubber latexes (e.g., saponified natural rubber latexes, epoxidized natural rubber latexes), and synthetic diene rubber latexes (e.g., polybutadiene rubber (BR) latexes, styrene-butadiene rubber (SBR) latexes, styrene-isoprene-butadiene rubber (SIBR) latexes, polyisoprene rubber latexes, acrylonitrile-butadiene rubber latexes, ethylene vinyl acetate rubber latexes, chloroprene rubber latexes, vinyl pyridine rubber latexes, butyl rubber latexes). These rubber latexes may be used alone or in combinations of two or more. Isoprene-based rubber latexes such as natural rubber latexes and polyisoprene rubber latexes, SBR latexes, and BR latexes are preferred among these, with isoprene-based rubber latexes being more preferred.

Natural rubber latex is collected as sap of natural rubber trees such as hevea trees and contains a rubber component and other components such as water, proteins, lipids, and inorganic salts. The gel fraction in rubber is considered to be derived from the presence of a complex of various impurities therein. In the present invention, the following natural rubber latexes may be used: raw latexes (field latexes) taken from hevea trees by tapping; concentrated latexes prepared by concentration via centrifugation or creaming (e.g., purified latexes, high-ammonia latexes prepared by adding ammonia in a conventional manner, LATZ latexes which have been stabilized with zinc oxide, TMTD, and ammonia), etc.

The pH of the rubber latex used is preferably 8.5 or higher, more preferably 9.5 or higher. The rubber latex having a pH of 8.5 or higher is less likely to be unstable and tends not to coagulate easily. The pH of the rubber latex is preferably 12.0 or lower, more preferably 11.0 or lower. The rubber latex having a pH of 12.0 or lower tends not to degrade easily.

The rubber latex can be prepared by known methods. Various commercial products are also usable. Here, the rubber latex to be used preferably has a rubber solids content of 10 to 80% by mass, more preferably at least 20% by mass but not higher than 65% by mass.

In step (2), the silica dispersion obtained in step (1) and the rubber latex may be mixed, for example, by placing the rubber in a known stirring device such as a high-speed homogenizer, an ultrasonic homogenizer, a colloid mill, or a blender mill and dropwise adding thereto the silica dispersion obtained in step (1) with stirring, or by dropwise adding the rubber latex to the silica dispersion obtained in step (1) with stirring. A mixture of the silica dispersion obtained in step (1) and the rubber (silica/rubber mixture, compounded latex) can be obtained by sufficiently stirring them until they are sufficiently dispersed. The temperature and time during the preparation of the mixture may be appropriately selected within a general range as long as the silica dispersion obtained in step (1) and the rubber can be sufficiently dispersed, for example, preferably at 10 to 40°C for 3 to 120 minutes, more preferably at 15 to 30°C for 5 to 90 minutes.

The pH of the silica/rubber mixture (compounded latex) obtained in step (2) is preferably 9.0 or higher, more preferably 9.5 or higher, still more preferably 10.2 or higher. The pH is also preferably 12.0 or lower, more preferably 11.5 or lower. The mixture of the silica dispersion obtained in step (1) and the rubber latex (compounded latex) having a pH within such a range can be less degraded and can be stable.

A composite (rubber/silica composite) in which the silica is sufficiently dispersed in the rubber matrix may be obtained by coagulating the silica/rubber mixture (compounded latex) obtained in step (2) as needed, and filtering and drying the coagula (aggregates containing the aggregated rubber and the filler) by known methods, followed by drying and then performing rubber kneading using a twin-screw roll mill or a Banbury mixer. The rubber/silica composite (wet masterbatch) may contain other components within a range that does not impair the advantageous effect.

The coagulation may be performed usually by adding an acid to the silica/rubber mixture (compounded latex) obtained in step (2). Examples of the acid used for coagulation include sulfuric acid, hydrochloric acid, formic acid, and acetic acid. The temperature during the coagulation is preferably 10 to 40°C.

In the coagulation, the pH of the silica/rubber mixture (compounded latex) obtained in step (2) is preferably adjusted to 3 to 5, more preferably 3 to 4.

Moreover, a coagulant may be added to control the coagulation state (the size of the aggregated particles).

Examples of coagulants include cationic polymers.

The rubber/silica composite (masterbatch) can be produced as described above or by other methods. Then, a rubber composition can be prepared, for example, by kneading the rubber/silica composite with other components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

For example, the rubber composition may be used in a tire component (i.e., as a tire rubber composition).

Non-limiting examples of tire components include any various tire components such as treads (cap treads, base treads), belt layers, sidewalls, bead apexes, clinch apexes, innerliners, undertreads, breaker toppings, and ply toppings. The rubber composition may desirably be used in a tread or a belt layer.

The rubber composition may be applied to a tire such as a pneumatic tire or a non-pneumatic tire, preferably a pneumatic tire. In particular, the tire may be suitably used as a summer tire or winter tire (e.g., studless winter tire, cold weather tire, snow tire, or studded tire). The tire may be used as a tire for passenger cars, large passenger cars, large SUVs, heavy duty vehicles such as trucks and buses, light trucks, or motorcycles, or as a racing tire (high performance tire), etc.

The tire can be produced from the rubber composition by usual methods. For example, an unvulcanized rubber composition containing various materials may be extruded into the shape of a tread or a belt layer and then formed together with other tire components in a usual manner on a tire building machine to build an unvulcanized tire, which may then be heated and pressurized in a vulcanizer to produce a tire.

<Tire>

To better achieve the advantageous effect, desirably, the tire of the present invention includes a tread including the above-described (vulcanized) rubber composition and satisfies the following relationship:

$$D1 \times L1 \leq 2.5$$

wherein D1 represents the average of the maximum diameters (pm) of the particles of silica in the tread (the average of the maximum diameters of the particles of silica contained in the rubber composition of the tread) observed with an electron microscope, and L1 represents the thickness (mm) of the tread.

The product of $D1 \times L1$ is preferably 2.3 or less, more preferably 1.8 or less, still more preferably 1.6 or less, further preferably 1.5 or less, further preferably 1.4 or less, further preferably 1.3 or less. The lower limit is preferably 1.0 or more, more preferably 1.1 or more, still more preferably 1.2 or more. When the product is within the range indicated above, the advantageous effect can be suitably achieved.

The reason for the above-mentioned advantageous effect is not exactly clear, but the advantageous effect is believed to be due to the following mechanism.

When the CV value of the particle diameter of the silica is reduced and, further, the average of the maximum diameters of the particles of silica is also reduced, it is considered that the network may be made finer so that the force transmission and reaction force generation inside the rubber can be facilitated. It is also considered that a smaller thickness of the tread layer may facilitate transmission of a reaction force to the interior and thus may facilitate improvement of handling stability. Therefore, it is believed that when the product of these parameters is adjusted to be not higher than a predetermined value, the network formation and force transmission inside the rubber can be ensured, and the handling stability during high-speed driving can be significantly improved.

To suitably achieve the advantageous effect, the thickness L1 of the tread desirably satisfies the following relationship:

$$L1 \leq 35 \text{ mm}.$$

The L1 is preferably 30 mm or less, more preferably 27 mm or less, still more preferably 25 mm or less. The lower limit is preferably 10 mm or more, more preferably 13 mm or more, still more preferably 15 mm or more. When the L1 is within the range indicated above, the advantageous effect can be suitably achieved.

To better achieve the advantageous effect, desirably, the tire of the present invention includes a belt layer including the above-described (vulcanized) rubber composition and satisfies the following relationship:

$$D2 \times L2 \le 2.7$$

wherein D2 represents the average of the maximum diameters (pm) of the particles of silica in the belt layer (the average of the maximum diameters of the particles of silica contained in the rubber composition of the belt layer) observed with an electron microscope, and L2 represents the distance (mm) from the radially outer (with respect to the tire) surface of the belt layer to the tread surface.

The product of D2 × L2 is preferably 2.5 or less, more preferably 1.9 or less, still more preferably 1.7 or less, further preferably 1.6 or less, further preferably 1.5 or less, further preferably 1.4 or less. The lower limit is preferably 1.0 or more, more preferably 1.1 or more, still more preferably 1.2 or more. When the product is within the range indicated above, the advantageous effect can be suitably achieved.

The reason for the above-mentioned advantageous effect is not exactly clear, but the advantageous effect is believed to be due to the following mechanism.

When the CV value of the particle diameter of the silica is reduced and, further, the average of the maximum diameters of the particles of silica is also reduced, it is considered that the network may be made finer so that the force transmission and reaction force generation inside the rubber can be facilitated. It is also considered that a shorter distance to the tread surface may facilitate instant generation of a reaction force and thus may facilitate improvement of handling stability. Thus, it is believed that when the product of these parameters is adjusted to be not higher than a predetermined value, the handling stability during high-speed driving can be significantly improved.

To suitably achieve the advantageous effect, the distance L2 from the radially outer surface of the belt layer to the tread surface desirably satisfies the following relationship:

$$L2 \le 42 \text{ mm}.$$

The L2 is preferably 32 mm or less, more preferably 29 mm or less, still more preferably 27 mm or less. The lower limit is preferably 12 mm or more, more preferably 15 mm or more, still more preferably 17 mm or more. When the L2 is within the range indicated above, the advantageous effect can be suitably achieved.

The thickness L1 of the tread means the thickness of the tread measured on the tire equator in a cross-section taken in the radial direction of the tire. The thickness L1 of the tread is measured along the normal of the tread surface at the tire equator and corresponds to the distance from the tread surface to the interface of the belt layer, carcass layer, belt-reinforcing layer, or other reinforcing layer containing steel or textile or other fiber material, which is outermost with respect to the tire. Here, when the tread has a groove on the tire equator, it is the linear distance from a plane defined by a straight line connecting the edges of the groove which are outermost in the tire radial direction.

The distance L2 from the radially outer surface of the belt layer to the tread surface means the distance from the radially outer (with respect to the tire) surface of the belt layer to the tread surface measured on the tire equator in a cross-section taken in the radial direction of the tire. The distance from the radially outer surface of the belt layer to the tread surface is measured along the normal of the radially outer surface of the belt layer on the tire equator. Here, when the tread has a groove on the tire equator, it is the linear distance to a plane defined by a straight line connecting the edges of the groove which are outermost in the tire radial direction.

Herein, the dimensions (dimensions such as the thickness L1 of the tread and the distance L2 from the radially outer surface of the belt layer to the tread surface) and angles of the tire are measured in a cross-section taken in the radial direction of the tire, unless otherwise stated. In the measurement, the width between the bead portions of the tire is fixed to the width of a normal rim. Here, when, for example, the angle of the cords in the belt layer to the tire circumferential direction, which will be described later, is measured, it may be determined by peeling the tread portion from the cross-section and observing it from the tire radial direction.

The term "normal rim" refers to a rim specified by a standard according to which tires are provided, and may be "standard rim" in the JATMA standard, "design rim" in the TRA standard, or "measuring rim" in the ETRTO standard.

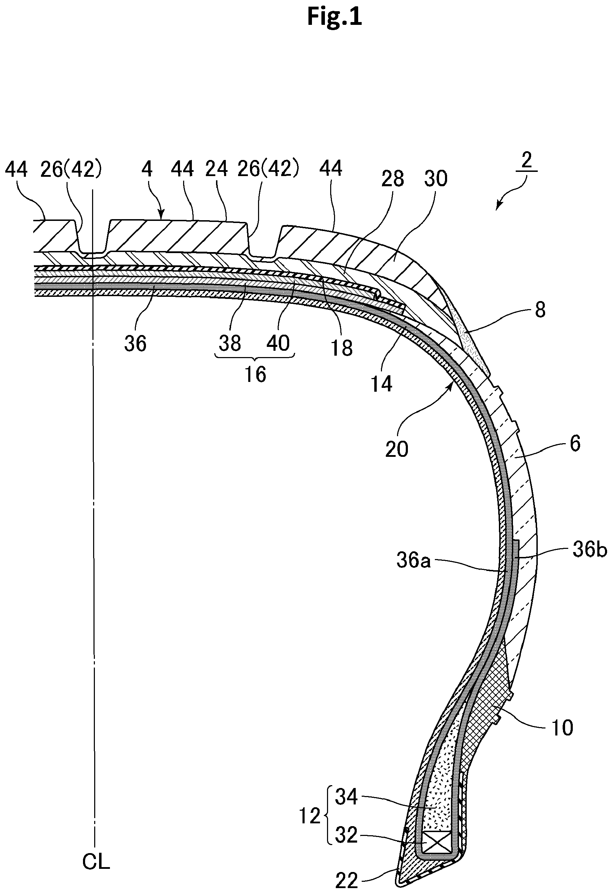

An example of a tire including the above-described rubber composition is described with reference to FIG. 1.

In FIG. 1, the vertical direction corresponds to the radial direction of a tire 2, the horizontal direction corresponds to the axial direction of the tire 2, and the direction perpendicular to the paper corresponds to the circumferential direction of the tire 2. A tread 4 includes a cap layer 30 and a base layer 28.

Here, although FIG. 1 shows an example of a two-layer tread 4 consisting of a cap layer 30 and a base layer 28, the tread may be a single-layer tread or a tread including three or more layers.

In the tire 2, each sidewall 6 extends substantially inwardly in the radial direction from the end of the tread 4.

The radially outer portion of the sidewall 6 is bonded to the tread 4. The radially inner portion of the sidewall 6 is bonded to a clinch 10. The sidewall 6 can prevent damage to a carcass 14.

In FIG. 1, each wing 8 is located between the tread 4 and the sidewall 6. The wing 8 is bonded to both the tread 4 and the sidewall 6.

Each clinch 10 is located substantially radially inward of the sidewall 6. The clinch 10 is located axially outward from a bead 12 and the carcass 14.

Each bead 12 is located axially inward of the clinch 10. The bead 12 includes a core 32 and an apex 34 that radially outwardly extends from the core 32. The core 32 desirably has a ring shape and contains a wound non-stretchable wire. The apex 34 is radially outwardly tapered.

The carcass 14 includes a carcass ply 36. Although the carcass 14 in the tire 2 includes one carcass ply 36, the carcass may include two or more carcass plies.

In the tire 2, the carcass ply 36 extends between the beads 12 on opposite sides along the tread 4 and the sidewalls 6. The carcass ply 36 is folded around each core 32 from the inside to the outside in the axial direction. Due to this folding, the carcass ply 36 is provided with a main portion 36a and a pair of folded portions 36b. Namely, the carcass ply 36 includes the main portion 36a and the pair of folded portions 36b.

Though not shown, the carcass ply 36 desirably includes a large number of parallel cords and a topping rubber. The absolute value of the angle of each cord to the equatorial plane is suitably from 75° to 90°. In other words, this carcass 14 preferably has a radial structure.

In FIG. 1, a belt layer 16 is located radially inward of the tread 4. The belt layer 16 is stacked on the carcass 14. The belt layer 16 reinforces the carcass 14. The belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times, but preferably not more than 0.9 times the cross-sectional width (see JATMA) of the tire 2.

Though not shown, the interior layer 38 and the exterior layer 40 each desirably include a large number of parallel cords and a topping rubber. In other words, the belt layer 16 contains a large number of parallel cords. Each cord is tilted relative to the equatorial plane. The absolute value of the tilt angle is generally at least 10° but not greater than 35°. The tilt direction of the cords in the interior layer 38 relative to the equatorial plane is opposite to the tilt direction of the cords in the exterior layer 40 relative to the equatorial plane.

The tread 4 and/or the belt layer 16 in the tire 2 includes the rubber composition satisfying the relationship (1): CV value $\leq$ 75%. Moreover, the rubber composition desirably satisfies the relationship: D $\leq$ 0.100 um. The tire 2 including the rubber composition desirably satisfies the relationships: D1 $\times$ L1 $\leq$ 1.5, D2 $\times$ L2 $\leq$ 1.6, L1 $\leq$ 35 mm, and L2 $\leq$ 42 mm.

In FIG. 1, a band 18 is located radially outward of the belt layer 16. The band 18 has a width that is equal to the width of the belt layer 16 with respect to the axial direction. The band 18 may be wider than the belt layer 16.

Though not shown, the band 18 desirably includes cords and a topping rubber. The cords are spirally wound. This band 18 has what is called a jointless structure. The cords extend substantially in the circumferential direction. The angle of the cords to the circumferential direction is preferably 5° or smaller or even 2° or smaller. As the belt layer 16 is restrained by these cords, lifting of the belt layer 16 is suppressed.

In FIG. 1, the belt layer 16 and the band 18 form a reinforcement layer. The reinforcement layer may be formed only of the belt layer 16.

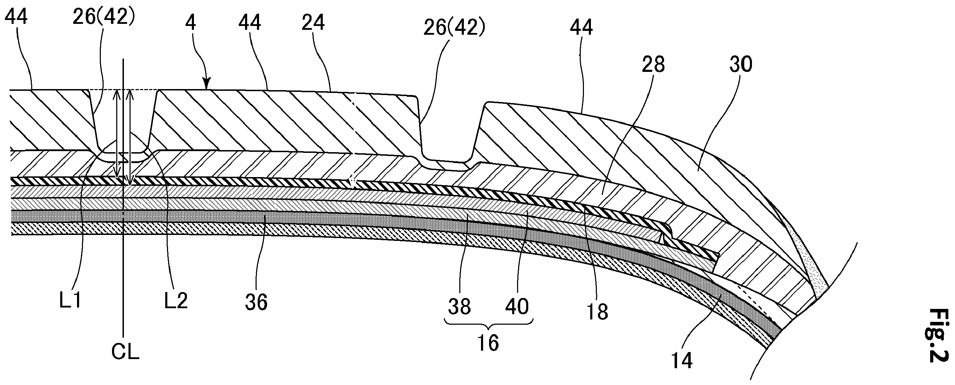

FIG. 2 is an enlarged view of the area around the tread 4 in FIG. 1.

L1 in FIG. 2 indicates the thickness of the tread measured on the tire equator in a cross-section taken in the radial direction of the tire from the tread surface 24. L1 is measured along the normal of the tread surface 24 on the tire equator and corresponds to the distance from the tread surface 24 to the interface of the band 18 which is outermost with respect to the tire.

L2 in FIG. 2 indicates the distance from the radially outer (with respect to the tire) surface of the exterior layer 40 of the belt layer 16 to the tread surface 24 and means the distance from the radially outer surface of the exterior layer 40 to the tread surface 24 measured on the tire equator in a cross-section taken in the radial direction of the tire. This distance is measured along the normal of the radially outer surface of the exterior layer 40 on the tire equator.

An innerliner 20 is located inward of the carcass 14. The innerliner 20 is bonded to the inner surface of the carcass 14. The base material rubber of the innerliner 20 is typically a butyl rubber or halogenated butyl rubber. The innerliner 20 maintains the internal pressure of the tire 2.

Each chafer 22 is located near the bead 12. In this embodiment, the chafer 22 desirably includes a rubber and a fabric impregnated with the rubber. The chafer 22 may be integrated with the clinch 10.

In the tire 2, the tread 4 has grooves 26 including main grooves 42. As shown in FIG. 1, the tread 4 has a plurality of, specifically three, main grooves 42 engraved thereon. The main grooves 42 are positioned at intervals in the axial direction. As the three main grooves 42 are engraved on the tread 4, the tread 4 is provided with four ribs 44 extending in the circumferential direction. In other words, each main groove 42 is between one rib 44 and another rib 44.

The main grooves 42 extend in the circumferential direction. The main grooves 42 are continuous in the circumferential direction without interruption. The main grooves 42 promote drainage of water present between the road surface and the tire 2, e.g., in rainy weather. Thus, the tire 2 can sufficiently contact the road surface even when the road surface is wet.

EXAMPLES

Examples (working examples) which are considered preferable to implement the invention are described below although the scope of the present invention is not limited to the examples.
The chemicals used in the examples and comparative examples are listed below.

NR: TSR20
Natural rubber latex: field latex procured from Muhibbah LATEKS
SBR latex: LX110 available from Zeon Corporation (E-SBR, vinyl content: 18% by mass, styrene content: 37.5% by mass, rubber component concentration of rubber latex: 40.5% by mass)
Modified SBR: HPR355 available from JSR Corporation (modified with 3-aminopropyltrimethoxysilane, styrene content: 27% by mass)
BR: BR150B (cis content: 97% by mass) available from Ube Industries, Ltd.
Silica 1: Premium SW available from Solvay ($N_2SA$: 275 $m^2$/g)
Silica 2: Zeosil 1165MP available from Rhodia ($N_2SA$: 160 $m^2$/g)
Silica 3: Zeosil Premium 200MP available from Rhodia ($N_2SA$: 220 $m^2$/g)
Silica 4: Zeosil 1115MP available from Rhodia ($N_2SA$: 115 $m^2$/g)
Fatty acid amide compound 1: diethanololeamide available from FUJIFILM Wako Pure Chemical Corporation
Fatty acid amide compound 2: palmitoylethanolamide available from Tokyo Chemical Industry Co., Ltd.
Fatty acid amide compound 3: oleylethanolamide available from FUJIFILM Wako Pure Chemical Corporation
Microfibrillated plant fibers: biomass nanofibers available from Sugino Machine Limited (product name "BiNFi-s cellulose", solids content: 2% by mass, moisture content: 98% by mass, average fiber diameter: 20 nm, average fiber length: 2000 nm)
Antioxidant: NOCRAC 6C available from Ouchi Shinko Chemical Industrial Co., Ltd. (N-phenyl-N'-(1,3-dimethylbutyl)-p-phenylenediamine, 6PPD)
Zinc oxide: zinc oxide #2 available from Mitsui Mining & Smelting Co., Ltd.
Stearic acid: TSUBAKI available from NOF Corporation
Carbon black: N220 available from Mitsubishi Chemical Corporation ($N_2SA$: 114 $m^2$/g)
Silane coupling agent: Si266 available from Evonik Degussa (bis(3-triethoxysilylpropyl)disulfide)
Sulfur: powdered sulfur available from Tsurumi Chemical Industry Co., Ltd.
Vulcanization accelerator 1: NOCCELER NS available from Ouchi Shinko Chemical Industrial Co., Ltd. (N-tert-butyl-2-benzothiazolylsulfenamide)
Vulcanization accelerator 2: NOCCELER D available from Ouchi Shinko Chemical Industrial Co., Ltd. (N,N'-diphenylguanidine)

(Preparation of silica dispersion)

According to the formulation recipe shown in Table 1, the silica, the fatty acid amide compound, the microfibrillated plant fibers, and water are added and stirred with a high-speed homogenizer at room temperature (20 to 30°C) for five minutes to prepare a silica dispersion containing silica and a fatty acid amide compound.

[Table 1]

| | | Silica dispersion | | | | | |
|---|---|---|---|---|---|---|---|
| | | 1 | 2 | 3 | 4 | 5 | 6 |
| Formulation (parts by mass) | Silica 1 | 100 | – | – | – | 100 | 100 |
| | Silica 2 | – | 100 | – | – | – | – |
| | Silica 3 | – | – | 100 | – | – | – |
| | Silica 4 | – | – | – | 100 | – | – |
| | Fatty acid amide compound 1 | 2 | 2 | 2 | 2 | – | – |
| | Fatty acid amide compound 2 | – | – | – | – | 2 | – |
| | Fatty acid amide compound 3 | – | – | – | – | – | 2 |
| | Microfibrillated plant fibers | 1 | 1 | 1 | 1 | 1 | 1 |
| | Pure water | 1000 | 1000 | 1000 | 1000 | 1000 | 1000 |

(Preparation of rubber/silica composite (wet masterbatch, WMB))

Rubber/filler composites (WMBs) are produced according to the formulation recipes shown in Table 2.

Specifically, the prepared silica dispersion is added to a natural rubber latex or SBR latex and then stirred using a high-speed homogenizer at room temperature for five minutes to obtain a compounded latex having a pH of 10.2.

Next, a 2% by mass aqueous formic acid solution is added at room temperature to adjust the pH to 3 to 4, thereby obtaining coagula.

The coagula are filtered and dried to prepare a rubber/silica composite (WMB).

[Table 2]

| Wet masterbatch (WMB) | | | |
|---|---|---|---|
| | Rubber latex | Silica dispersion | Amount (parts by mass) of silica per 100 parts by mass of rubber solids in rubber latex |
| WMB 1-1 | Natural rubber latex | Silica dispersion 1 | 50 |
| WMB 1-2 | Natural rubber latex | Silica dispersion 2 | 50 |
| WMB 1-3 | Natural rubber latex | Silica dispersion 3 | 50 |
| WMB 1-4 | Natural rubber latex | Silica dispersion 4 | 50 |
| WMB 1-5 | Natural rubber latex | Silica dispersion 5 | 50 |
| WMB 1-6 | Natural rubber latex | Silica dispersion 6 | 50 |

(continued)

| Wet masterbatch (WMB) | | | |
|---|---|---|---|
| | Rubber latex | Silica dispersion | Amount (parts by mass) of silica per 100 parts by mass of rubber solids in rubber latex |
| WMB 2-1 | SBR latex | Silica dispersion 1 | 50 |
| WMB 2-2 | SBR latex | Silica dispersion 2 | 50 |

(Preparation of rubber/silica composite (dry masterbatch, DMB))

Rubber/filler composites (DMBs) are produced according to the formulation recipes shown in Table 3.

Specifically, the silica and the rubber are kneaded using a 1.7 L Banbury mixer to prepare a rubber/silica composite (DMB).

[Table 3]

| Dry masterbatch (DMB) | | | |
|---|---|---|---|
| | Rubber type | Silica Type | Amount (parts by mass) of silica per 100 parts by mass of rubber solids |
| DMB 1-1 | NR | Silica 1 | 50 |
| DMB 1-2 | NR | Silica 2 | 50 |
| DMB 1-3 | NR | Silica 3 | 50 |
| DMB 1-4 | NR | Silica 4 | 50 |
| DMB 2-1 | SBR | Silica 1 | 50 |
| DMB 2-2 | SBR | Silica 2 | 50 |

<Preparation of test tire>

According to the formulation recipe shown in Table 4 to 19, the chemicals other than the sulfur and vulcanization accelerators are kneaded using a 1.7 L Banbury mixer.

Next, the kneaded mixture is kneaded with the sulfur and vulcanization accelerators using a roll mill to obtain an unvulcanized rubber composition.

The unvulcanized rubber composition is formed into the shape of a tread or a belt layer and assembled with other tire components on a tire building machine to build an unvulcanized tire. Then, the unvulcanized tire is vulcanized at 170°C for 12 minutes to prepare a test tire (size: 195/65R15, specification: indicated in each table).

The test tires prepared from compositions varied as shown in the tables were simulated, and the results calculated according to the below-described evaluations are shown in the tables. The amount of microfibrillated plant fibers is not indicated in the formulations in Tables 4 to 19 because the amount is very small. However, in the formulations including a wet masterbatch (WMB), 1 part by mass of microfibrillated plant fibers have been compounded per 100 parts by mass of silica in the WMB preparation as shown in Tables 1 and 2.

Here, the standard comparative examples used are as follows.

Table 4: Comparative Example 1-1b
Table 5: Comparative Example 1-2
Table 6: Comparative Example 1-3
Table 7: Comparative Example 1-4
Table 8: Comparative Example 1-5
Table 9: Comparative Example 1-6
Table 10: Comparative Example 2-1b
Table 11: Comparative Example 2-2
Table 12: Comparative Example 2-3
Table 13: Comparative Example 2-4
Table 14: Comparative Example 2-5
Table 15: Comparative Example 2-6

Table 16: Comparative Example 3-1
Table 17: Comparative Example 3-2
Table 18: Comparative Example 4-1
Table 19: Comparative Example 4-2

(Measurement of average D and standard deviation of maximum diameters of particles of silica, calculation of CV value)

The particles of silica in a vulcanized rubber collected from the tread or belt layer of each test tire are observed with FIB-SEM (focused ion beam, "Helios" available from FEI).

The acquired 40000x images are binarized using Fiji (ImageJ) - "Trainable Weka Segmentation".

The average and standard deviation are calculated from the numerical data of the "maximum Major" of the particle diameter of silica.

The CV value is calculated from the average and standard deviation.

```
CV value (%) = (Standard deviation of maximum diameters
(µm) of particles of silica)/(Average of maximum diameters
(µm) of particles of silica) × 100
```

Here, in the FIB-SEM measurement, the size of the observation field is "3 × 2 pm", and the data from five different fields of view are used to determine the particle diameter and the like.

(Handling stability during high-speed driving)

The test tires are mounted on each wheel of a front-engine, front-wheel-drive car of 2000 cc displacement made in Japan, and the car is driven at 100 km/h on a test course. Then, the driver subjectively evaluates handling stability during zig-zag driving.

Ten drivers rate their subjective feeling on a 10-point scale.

The sum of the ratings is determined as a score, which is expressed as an index relative to that of the standard comparative example taken as 100. A higher index indicates better handling stability during high-speed driving.

```
[Table 4]
```

Tread

| | | Example | Comparative Example | |
|---|---|---|---|---|
| | | 1-1 | 1-1a | 1-1b |
| Formulation (parts by mass) | DMB 1-1 (Silica 1) | — | 150 (NR 100 /Silica 1 50) | — |
| | WMB 1-1 (Silica 1, Fatty acid amide compound 1) | 150 (NR 100 /Silica 1 50) | — | — |
| | Modified SBR | — | — | 80 |
| | BR | — | — | 20 |
| | Silica 1 | — | — | 50 |
| | Antioxidant | 2 | 2 | 2 |
| | Zinc oxide | 3 | 3 | 3 |
| | Stearic acid | 4 | 4 | 4 |
| | Carbon black | 5 | 5 | 5 |
| | Silane coupling agent | 5 | 5 | 5 |
| | Sulfur | 1.7 | 1.7 | 1.7 |
| | Vulcanization accelerator 1 | 1.7 | 1.7 | 1.7 |
| | Vulcanization accelerator 2 | 1 | 1 | 1 |
| Physical properties/Evaluation | Average D1 of maximum diameters (μm) of particles of silica | 0.051 | 0.064 | 0.052 |
| | Standard deviation of maximum diameters (μm) of particles of silica | 0.036 | 0.058 | 0.044 |
| | CV value (%) | 70.5 | 90.8 | 84.6 |
| | Thickness L1 (mm) of tread | 25 | 25 | 25 |
| | D1 × L1 | 1.3 | 1.6 | 1.3 |
| | Handling stability during high-speed driving | 108 | 92 | 100 |

[Table 5]

Tread

| | | Example | Comparative Example |
|---|---|---|---|
| | | 1-2 | 1-2 |
| Formulation (parts by mass) | DMB 1-2 (Silica 2) | — | 150 (NR 100 /Silica 2 50) |
| | WMB 1-2 (Silica 2, Fatty acid amide compound 1) | 150 (NR 100 /Silica 2 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D1 of maximum diameters (μm) of particles of silica | 0.070 | 0.092 |
| | Standard deviation of maximum diameters (μm) of particles of silica | 0.042 | 0.073 |
| | CV value (%) | 60.3 | 79.2 |
| | Thickness L1 (mm) of tread | 25 | 25 |
| | D1 × L1 | 1.8 | 2.3 |
| | Handling stability during high-speed driving | 110 | 100 |

[Table 6]

Tread

| | | Example | Comparative Example |
|---|---|---|---|
| | | 1-3 | 1-3 |
| Formulation (parts by mass) | DMB 1-3 (Silica 3) | — | 150 (NR 100 /Silica 3 50) |
| | WMB 1-3 (Silica 3, Fatty acid amide compound 1) | 150 (NR 100 /Silica 3 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D1 of maximum diameters (μm) of particles of silica | 0.059 | 0.061 |
| | Standard deviation of maximum diameters (μm) of particles of silica | 0.030 | 0.052 |
| | CV value (%) | 51.5 | 85.3 |
| | Thickness L1 (mm) of tread | 25 | 25 |
| | D1 × L1 | 1.5 | 1.5 |
| | Handling stability during high-speed driving | 116 | 100 |

[Table 7]

Tread

|  |  | Example | Comparative Example |
|---|---|---|---|
|  |  | 1-4 | 1-4 |
| Formulation (parts by mass) | DMB 1-4 (Silica 4) | — | 150 (NR 100 /Silica 4 50) |
|  | WMB 1-4 (Silica 4, Fatty acid amide compound 1) | 150 (NR 100 /Silica 4 50) | — |
|  | Antioxidant | 2 | 2 |
|  | Zinc oxide | 3 | 3 |
|  | Stearic acid | 4 | 4 |
|  | Carbon black | 5 | 5 |
|  | Silane coupling agent | 5 | 5 |
|  | Sulfur | 1.7 | 1.7 |
|  | Vulcanization accelerator 1 | 1.7 | 1.7 |
|  | Vulcanization accelerator 2 | 1 | 1 |
| Physical properties/Evaluation | Average D1 of maximum diameters (μm) of particles of silica | 0.070 | 0.092 |
|  | Standard deviation of maximum diameters (μm) of particles of silica | 0.042 | 0.073 |
|  | CV value (%) | 60.3 | 79.2 |
|  | Thickness L1 (mm) of tread | 25 | 25 |
|  | D1 × L1 | 1.8 | 2.3 |
|  | Handling stability during high-speed driving | 110 | 100 |

[Table 8]

Tread

| | | Example | Comparative Example |
|---|---|---|---|
| | | 1-5 | 1-5 |
| Formulation (parts by mass) | DMB 1-1 (Silica 1) | — | 150 (NR 100 /Silica 1 50) |
| | WMB 1-5 (Silica 1, Fatty acid amide compound 2) | 150 (NR 100 /Silica 1 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D1 of maximum diameters (μm) of particles of silica | 0.050 | 0.064 |
| | Standard deviation of maximum diameters (μm) of particles of silica | 0.035 | 0.058 |
| | CV value (%) | 70.0 | 90.8 |
| | Thickness L1 (mm) of tread | 25 | 25 |
| | D1 × L1 | 1.3 | 1.6 |
| | Handling stability during high-speed driving | 108 | 100 |

[Table 9]

Tread

| | | Example | Comparative Example |
|---|---|---|---|
| | | 1-6 | 1-6 |
| Formulation (parts by mass) | DMB 1-1 (Silica 1) | — | 150 (NR 100 /Silica 1 50) |
| | WMB 1-6 (Silica 1, Fatty acid amide compound 3) | 150 (NR 100 /Silica 1 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D1 of maximum diameters (μm) of particles of silica | 0.053 | 0.064 |
| | Standard deviation of maximum diameters (μm) of particles of silica | 0.038 | 0.058 |
| | CV value (%) | 71.7 | 90.8 |
| | Thickness L1 (mm) of tread | 25 | 25 |
| | D1 × L1 | 1.3 | 1.6 |
| | Handling stability during high-speed driving | 105 | 100 |

[Table 10]

Belt layer

| | | Example | Comparative Example | |
|---|---|---|---|---|
| | | 2-1 | 2-1a | 2-1b |
| Formulation (parts by mass) | DMB 1-1 (Silica 1) | — | 150 (NR 100 /Silica 1 50) | — |
| | WMB 1-1 (Silica 1, Fatty acid amide compound 1) | 150 (NR 100 /Silica 1 50) | — | — |
| | Modified SBR | — | — | 80 |
| | BR | — | — | 20 |
| | Silica 1 | — | — | 50 |
| | Antioxidant | 2 | 2 | 2 |
| | Zinc oxide | 3 | 3 | 3 |
| | Stearic acid | 4 | 4 | 4 |
| | Carbon black | 5 | 5 | 5 |
| | Silane coupling agent | 5 | 5 | 5 |
| | Sulfur | 1.7 | 1.7 | 1.7 |
| | Vulcanization accelerator 1 | 1.7 | 1.7 | 1.7 |
| | Vulcanization accelerator 2 | 1 | 1 | 1 |
| Physical properties/Evaluation | Average D2 of maximum diameters (μm) of particles of silica | 0.051 | 0.064 | 0.052 |
| | Standard deviation of maximum diameters (μm) of particles of silica | 0.036 | 0.058 | 0.044 |
| | CV value (%) | 70.5 | 90.8 | 84.6 |
| | Distance L2 (mm) from radially outer surface of belt layer to tread surface | 27 | 27 | 27 |
| | D2 × L2 | 1.4 | 1.7 | 1.4 |
| | Handling stability during high-speed driving | 110 | 90 | 100 |

[Table 11]

Belt layer

| | | Example | Comparative Example |
|---|---|---|---|
| | | 2-2 | 2-2 |
| Formulation (parts by mass) | DMB 1-2 (Silica 2) | — | 150 (NR 100 /Silica 2 50) |
| | WMB 1-2 (Silica 2, Fatty acid amide compound 1) | 150 (NR 100 /Silica 2 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D2 of maximum diameters (μm) of particles of silica | 0.070 | 0.092 |
| | Standard deviation of maximum diameters (μm) of particles of silica | 0.042 | 0.073 |
| | CV value (%) | 60.3 | 79.2 |
| | Distance L2 (mm) from radially outer surface of belt layer to tread surface | 27 | 27 |
| | D2 × L2 | 1.9 | 2.5 |
| | Handling stability during high-speed driving | 106 | 100 |

[Table 12]

Belt layer

| | | Example | Comparative Example |
|---|---|---|---|
| | | 2-3 | 2-3 |
| Formulation (parts by mass) | DMB 1-3 (Silica 3) | — | 150 (NR 100 /Silica 3 50) |
| | WMB 1-3 (Silica 3, Fatty acid amide compound 1) | 150 (NR 100 /Silica 3 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D2 of maximum diameters (μm) of particles of silica | 0.059 | 0.061 |
| | Standard deviation of maximum diameters (μm) of particles of silica | 0.030 | 0.052 |
| | CV value (%) | 51.5 | 85.3 |
| | Distance L2 (mm) from radially outer surface of belt layer to tread surface | 27 | 27 |
| | D2 × L2 | 1.6 | 1.7 |
| | Handling stability during high-speed driving | 114 | 100 |

[Table 13]

Belt layer

| | | | Example | Comparative Example |
|---|---|---|---|---|
| | | | 2-4 | 2-4 |
| Formulation (parts by mass) | DMB 1-4 (Silica 4) | | — | 150 (NR 100 /Silica 4 50) |
| | WMB 1-4 (Silica 4, Fatty acid amide compound 1) | | 150 (NR 100 /Silica 4 50) | — |
| | Antioxidant | | 2 | 2 |
| | Zinc oxide | | 3 | 3 |
| | Stearic acid | | 4 | 4 |
| | Carbon black | | 5 | 5 |
| | Silane coupling agent | | 5 | 5 |
| | Sulfur | | 1.7 | 1.7 |
| | Vulcanization accelerator 1 | | 1.7 | 1.7 |
| | Vulcanization accelerator 2 | | 1 | 1 |
| Physical properties/Evaluation | Average D2 of maximum diameters (μm) of particles of silica | | 0.070 | 0.092 |
| | Standard deviation of maximum diameters (μm) of particles of silica | | 0.042 | 0.073 |
| | CV value (%) | | 60.3 | 79.2 |
| | Distance L2 (mm) from radially outer surface of belt layer to tread surface | | 27 | 27 |
| | D2 × L2 | | 1.9 | 2.5 |
| | Handling stability during high-speed driving | | 104 | 100 |

[Table 14]

Belt layer

| | | | Example | Comparative Example |
|---|---|---|---|---|
| | | | 2-5 | 2-5 |
| Formulation (parts by mass) | DMB 1-1 (Silica 1) | | — | 150 (NR 100 /Silica 1 50) |
| | WMB 1-5 (Silica 1, Fatty acid amide compound 2) | | 150 (NR 100 /Silica 1 50) | — |
| | Antioxidant | | 2 | 2 |
| | Zinc oxide | | 3 | 3 |
| | Stearic acid | | 4 | 4 |
| | Carbon black | | 5 | 5 |
| | Silane coupling agent | | 5 | 5 |
| | Sulfur | | 1.7 | 1.7 |
| | Vulcanization accelerator 1 | | 1.7 | 1.7 |
| | Vulcanization accelerator 2 | | 1 | 1 |
| Physical properties/Evaluation | Average D2 of maximum diameters (μm) of particles of silica | | 0.050 | 0.064 |
| | Standard deviation of maximum diameters (μm) of particles of silica | | 0.035 | 0.058 |
| | CV value (%) | | 70.0 | 90.8 |
| | Distance L2 (mm) from radially outer surface of belt layer to tread surface | | 27 | 27 |
| | D2 × L2 | | 1.4 | 1.7 |
| | Handling stability during high-speed driving | | 108 | 100 |

[Table 15]

Belt layer

| | | | Example | Comparative Example |
|---|---|---|---|---|
| | | | 2-6 | 2-6 |
| Formulation (parts by mass) | DMB 1-1 (Silica 1) | | — | 150 (NR 100 /Silica 1 50) |
| | WMB 1-6 (Silica 1, Fatty acid amide compound 3) | | 150 (NR 100 /Silica 1 50) | — |
| | Antioxidant | | 2 | 2 |
| | Zinc oxide | | 3 | 3 |
| | Stearic acid | | 4 | 4 |
| | Carbon black | | 5 | 5 |
| | Silane coupling agent | | 5 | 5 |
| | Sulfur | | 1.7 | 1.7 |
| | Vulcanization accelerator 1 | | 1.7 | 1.7 |
| | Vulcanization accelerator 2 | | 1 | 1 |
| Physical properties/Evaluation | Average D2 of maximum diameters (μm) of particles of silica | | 0.053 | 0.064 |
| | Standard deviation of maximum diameters (μm) of particles of silica | | 0.038 | 0.058 |
| | CV value (%) | | 71.7 | 90.8 |
| | Distance L2 (mm) from radially outer surface of belt layer to tread surface | | 27 | 27 |
| | D2 × L2 | | 1.4 | 1.7 |
| | Handling stability during high-speed driving | | 108 | 100 |

[Table 16]

Tread

| | | Example | Comparative Example |
|---|---|---|---|
| | | 3-1 | 3-1 |
| Formulation (parts by mass) | DMB 2-1 (Silica 1) | — | 150 (SBR 100 /Silica 1 50) |
| | WMB 2-1 (Silica 1, Fatty acid amide compound 1) | 150 (SBR 100 /Silica 1 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D1 of maximum diameters (μm) of particles of silica | 0.045 | 0.050 |
| | Standard deviation of maximum diameters (μm) of particles of silica | 0.031 | 0.048 |
| | CV value (%) | 68.9 | 96.0 |
| | Thickness L1 (mm) of tread | 25 | 25 |
| | D1 × L1 | 1.1 | 1.3 |
| | Handling stability during high-speed driving | 110 | 100 |

[Table 17]

Tread

| | | Example | Comparative Example |
|---|---|---|---|
| | | 3-2 | 3-2 |
| Formulation (parts by mass) | DMB 2-2 (Silica 2) | — | 150 (SBR 100 /Silica 2 50) |
| | WMB 2-2 (Silica 2, Fatty acid amide compound 1) | 150 (SBR 100 /Silica 2 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D1 of maximum diameters (μm) of particles of silica | 0.063 | 0.081 |
| | Standard deviation of maximum diameters (μm) of particles of silica | 0.043 | 0.072 |
| | CV value (%) | 68.3 | 88.9 |
| | Thickness L1 (mm) of tread | 25 | 25 |
| | D1 × L1 | 1.6 | 2.0 |
| | Handling stability during high-speed driving | 108 | 100 |

[Table 18]

Belt layer

| | | Example | Comparative Example |
|---|---|---|---|
| | | 4-1 | 4-1 |
| Formulation (parts by mass) | DMB 2-1 (Silica 1) | — | 150 (SBR 100 /Silica 1 50) |
| | WMB 2-1 (Silica 1, Fatty acid amide compound 1) | 150 (SBR 100 /Silica 1 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D2 of maximum diameters (μm) of particles of silica | 0.045 | 0.050 |
| | Standard deviation of maximum diameters (μm) of particles of silica | 0.031 | 0.048 |
| | CV value (%) | 68.9 | 96.0 |
| | Distance L2 (mm) from radially outer surface of belt layer to tread surface | 27 | 27 |
| | D2 × L2 | 1.2 | 1.4 |
| | Handling stability during high-speed driving | 110 | 100 |

[Table 19]

Belt layer

| | | Example | Comparative Example |
|---|---|---|---|
| | | 4-2 | 4-2 |
| Formulation (parts by mass) | DMB 2-2 (Silica 2) | — | 150 (SBR 100 /Silica 2 50) |
| | WMB 2-2 (Silica 2, Fatty acid amide compound 1) | 150 (SBR 100 /Silica 2 50) | — |
| | Antioxidant | 2 | 2 |
| | Zinc oxide | 3 | 3 |
| | Stearic acid | 4 | 4 |
| | Carbon black | 5 | 5 |
| | Silane coupling agent | 5 | 5 |
| | Sulfur | 1.7 | 1.7 |
| | Vulcanization accelerator 1 | 1.7 | 1.7 |
| | Vulcanization accelerator 2 | 1 | 1 |
| Physical properties/Evaluation | Average D2 of maximum diameters (μm) of particles of silica | 0.063 | 0.081 |
| | Standard deviation of maximum diameters (μm) of particles of silica | 0.043 | 0.072 |
| | CV value (%) | 68.3 | 88.9 |
| | Distance L2 (mm) from radially outer surface of belt layer to tread surface | 27 | 27 |
| | D2 × L2 | 1.7 | 2.2 |
| | Handling stability during high-speed driving | 110 | 100 |

Exemplary embodiments of the present invention include:

Embodiment 1. A rubber composition, containing at least one rubber component and at least one silica,

the rubber composition satisfying the following relationship (1):

$$CV \ value \le 75\%$$

wherein CV value represents a coefficient of variation of maximum diameters of particles of the silica observed with an electron microscope.

Embodiment 2. The rubber composition according to Embodiment 1,
wherein the rubber component includes an isoprene-based rubber.
Embodiment 3. The rubber composition according to Embodiment 1 or 2,
wherein the rubber composition contains a fatty acid amide compound.
Embodiment 4. The rubber composition according to any one of Embodiments 1 to 3,
wherein an amount of the silica per 100 parts by mass of the rubber component is 30 parts by mass or more.
Embodiment 5. The rubber composition according to any one of Embodiments 1 to 4,
wherein the rubber composition satisfies the following relationship:

$$D \le 0.070 \ \mu m$$

wherein D represents an average of maximum diameters of particles of the silica observed with an electron microscope.

Embodiment 6. A tire, including the rubber composition according to any one of Embodiments 1 to 5.

Embodiment 7. A tire, including a tread and/or a belt layer each including the rubber composition according to any one of Embodiments 1 to 5.

Embodiment 8. A tire, including a tread including the rubber composition according to any one of Embodiments 1 to 5, the tire satisfying the following relationship:

$$D1 \times L1 \le 1.5$$

wherein D1 represents an average of maximum diameters (pm) of particles of the silica in the tread observed with an electron microscope, and L1 represents a thickness (mm) of the tread.

Embodiment 9. The tire according to Embodiment 8, wherein the thickness L1 of the tread satisfies the following relationship:

$$L1 \le 25 \ mm.$$

Embodiment 10. A tire, including a belt layer including the rubber composition according to any one of Embodiments 1 to 5, the tire satisfying the following relationship:

$$D2 \times L2 \le 1.6$$

wherein D2 represents an average of maximum diameters (pm) of particles of the silica in the belt layer observed with an electron microscope, and L2 represents a distance (mm) from a radially outer surface of the belt layer to a tread surface.

Embodiment 11. The tire according to Embodiment 10, wherein the distance L2 from a radially outer surface of the belt layer to a tread surface satisfies the following relationship:

$$L2 \le 27 \ mm.$$

REFERENCE SIGNS LIST

| 2 | tire |
| 4 | tread |
| 6 | sidewall |
| 8 | wing |
| 10 | clinch |
| 12 | bead |
| 14 | carcass |
| 16 | belt layer |
| 18 | band |
| 20 | innerliner |
| 22 | chafer |
| 24 | tread surface |
| 26 | groove |
| 28 | base layer |
| 30 | cap layer |

32      core
34      apex
36      carcass ply
36a     main portion
36b     folded portion
38      interior layer
40      exterior layer
42      main groove
44      rib
CL      equator of tire 2
L1      thickness of tread measured at predetermined point on tread surface 24
L2      distance from predetermined point on outer surface of exterior layer 40 of belt layer 16 to tread surface 24

**Claims**

1. A rubber composition, comprising at least one rubber component and at least one silica,
   the rubber composition satisfying the following relationship (1):

$$CV \text{ value} \leq 75\%$$

   wherein CV value represents a coefficient of variation of maximum diameters of particles of the silica observed with an electron microscope.

2. The rubber composition according to claim 1,
   wherein the rubber component comprises an isoprene-based rubber.

3. The rubber composition according to claim 1 or 2,
   wherein the rubber composition comprises a fatty acid amide compound.

4. The rubber composition according to any one of claims 1 to 3,
   wherein an amount of the silica per 100 parts by mass of the rubber component is 30 parts by mass or more.

5. The rubber composition according to any one of claims 1 to 4,
   wherein the rubber composition satisfies the following relationship:

$$D \leq 0.070 \; \mu m$$

   wherein D represents an average of maximum diameters of particles of the silica observed with an electron microscope.

6. A tire, comprising the rubber composition according to any one of claims 1 to 5.

7. A tire, comprising a tread and/or a belt layer each comprising the rubber composition according to any one of claims 1 to 5.

8. A tire, comprising a tread comprising the rubber composition according to any one of claims 1 to 5,
   the tire satisfying the following relationship:

$$D1 \times L1 \leq 1.5$$

   wherein D1 represents an average of maximum diameters (pm) of particles of the silica in the tread observed with an electron microscope, and L1 represents a thickness (mm) of the tread.

9. The tire according to claim 8,

wherein the thickness L1 of the tread satisfies the following relationship:

$$L1 \leq 25 \text{ mm.}$$

10. A tire, comprising a belt layer comprising the rubber composition according to any one of claims 1 to 5, the tire satisfying the following relationship:

$$D2 \times L2 \leq 1.6$$

wherein D2 represents an average of maximum diameters (pm) of particles of the silica in the belt layer observed with an electron microscope, and L2 represents a distance (mm) from a radially outer surface of the belt layer to a tread surface.

11. The tire according to claim 10, wherein the distance L2 from a radially outer surface of the belt layer to a tread surface satisfies the following relationship:

$$L2 \leq 27 \text{ mm.}$$

# Fig.1

**Fig.2**

Europäisches
Patentamt

European
Patent Office

Office européen
des brevets

# EUROPEAN SEARCH REPORT

Application Number

EP 23 16 8991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 175767 A (SUMITOMO RUBBER IND) 4 November 2021 (2021-11-04) * paragraph [0005] * * paragraph [0012] * * paragraph [0016] - paragraph [0017] * * paragraph [0076] * * paragraph [0092] * * paragraph [0097] * * paragraph [0102] - paragraph [0104] * * example 11; table 1 * | 1-11 | INV. B60C1/00 C08L7/00 C08L7/02 C08L9/08 |
| X | JP 2021 188008 A (SUMITOMO RUBBER IND) 13 December 2021 (2021-12-13) * paragraph [0007] * * paragraph [0015] * * paragraph [0081] * * paragraph [0109] - paragraph [0112] * * example 7; table 1 * | 1-11 | |
| X | JP 2021 172711 A (SUMITOMO RUBBER IND) 1 November 2021 (2021-11-01) * paragraph [0005] * * paragraph [0084] * * paragraph [0104] * * paragraph [0114] - paragraph [0116] * * table 1 * | 1-11 | TECHNICAL FIELDS SEARCHED (IPC) B60C C08L |

The present search report has been drawn up for all claims

| Place of search | Date of completion of the search | Examiner |
|---|---|---|
| Munich | 5 September 2023 | Laïb, Samia |

## ANNEX TO THE EUROPEAN SEARCH REPORT
## ON EUROPEAN PATENT APPLICATION NO.

EP 23 16 8991

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | Publication date |
|---|---|---|---|---|
| JP 2021175767 | A | 04-11-2021 | NONE | |
| JP 2021188008 | A | 13-12-2021 | NONE | |
| JP 2021172711 | A | 01-11-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4414370 A
- JP S596207 A
- JP H558005 B
- JP H1313522 A
- US 5010166 A

**Non-patent literature cited in the description**

- annual research report TREND. Toagosei Co., Ltd, 2000, vol. 3, 42-45